# FASCICULE DE BREVET EUROPEEN

(11) **EP 0 471 103 B1**
(45) Date de publication et mention de la délivrance du brevet: **17.08.1994**
(21) Numéro de dépôt: 90115633.1
(22) Date de dépôt: 16.08.1990
(51) Int. Cl.: A23L 1/16, A23P 1/12

(54) **Procédé de fabrication par extrusion de pâtes alimentaires et dispositif pour la mise en oeuvre du procédé**
Verfahren zur Herstellung von Teigwaren durch Extrusion und Einrichtung dafür
Method for manufacturing pasta by extrusion and device therefor

(43) Date de publication de la demande: 19.02.1992
(73) Titulaire: SOCIETE DES PRODUITS NESTLE S.A., 1800 Vevey (CH)
(72) Inventeur: Hauser, Thomas Wilhelm, CH-8006 Zürich (CH); Lechthaler, Jurg, CH-8051 Zürich (CH)

(56) Documents cités:
- EP-A- 0 169 106
- EP-A- 0 272 502
- WO-A-89/04610
- FR-A- 2 474 831
- FR-A- 2 554 685
- US-A- 4 568 550
- FOOD TECHNOLOGY vol. 38, no. 11, novembre 1984, CHICAGO, IL, USAPFLEIDERER CORP.: "TOTAL FLEXIBILITY"
- C.MERCIER, P.LINKO, J.M.HARPER: "EXTRUSION COOKING" 1989, AMERICAN ASSOCIATIONOF CEREAL CHEMISTS, St PAUL, MINNESOTA, USA.

## Description

La présente invention est relative à un procédé de fabrication par extrusion de pâtes alimentaires et à un dispositif pour la mise en oeuvre du procédé.

Un procédé classique pour la production de pâtes alimentaires consiste, dans un premier dispositif, à mélanger intimement une farine de céréales et une quantité appropriée d'eau de façon à obtenir une pâte dans laquelle l'hydratation de l'amidon et du gluten a déjà commencé.
Dans une deuxième étape, et dans un deuxième dispositif, la pâte obtenue est soumise à un traitement mécanique de pétrissage au cours duquel est construit le réseau de gluten, ce qui conduit à un produit élastique.
Dans une troisième étape, et dans un troisième dispositif, la pâte obtenue est soumise soit à une extrusion dans un dispositif constitué d'une vis d'extrusion placée dans un fourreau terminé par une filière qui donne sa forme définitive au produit, soit à un laminage.
La première étape peut durer de 20 à 30 minutes, la deuxième étape durant environ 10 minutes.

Différentes tentatives ont été faites pour réduire la durée du procédé.
On a ainsi proposé de réaliser la première étape dans un mélangeur rapide à haute vitesse. Ceci a ramené la durée de cette étape à moins de 30 secondes.
On a par ailleurs proposé, par exemple par le document WO 90/05452, de réaliser les deux premières étapes dans un dispositif unique constitué de deux vis sans fin s'engrenant l'une dans l'autre, tournant dans le même sens et placées dans un fourreau.
Dans ce document, il est ainsi proposé de fabriquer une pâte, par exemple destinée à être ensuite extrudée par un extrudeur à une vis pour donner des pâtes alimentaires, les phases de mélange et de pétrissage étant réalisées dans un dispositif unique, en une durée inférieure à une minute.

Dans ce procédé, la teneur en eau de la pâte après addition d'eau est comprise entre 25% et 40% en poids et le produit est maintenu à une température comprise entre 40 et 50°C pour éviter une cuisson qui entraînerait des modifications irréversibles du produit.
Si ce dispositif et ce procédé permettent effectivement de réduire sensiblement le temps de mélange et de pétrissage, il n'en demeure pas moins qu'il est toujours nécessaire de procéder à un transfert de la pâte obtenue dans un dispositif séparé d'extrusion.
Ainsi, d'une part, le procédé de fabrication n'est pas continu et d'autre part, la réduction du temps de fabrication n'est pas optimale.
On connaît également EP 272502 qui décrit un procédé de préparation de pâtes à cuisson rapide, dans lequel on prépare un mélange d'eau et de farine, puis l'on pétrit ce mélange à 77-88°C avant de l'extruder à 60-88°C.
L'appareillage nécessaire pour mettre en oeuvre ce procédé consiste en un mélangeur, pouvant également servir comme préconditionneur, disposé en amont d'un extrudeur.
FR 2554685 décrit également un procédé de préparation de pâtes alimentaires dans lequel les différentes matières de départ sont amenées en trois endroits différents du dispositif, avant d'être mélangées selon un mode très particulier, puis extrudées.
Il est à noter que dans une des zones de mélange (zone B où s'effectue le cisaillement), la température du mélange atteint une température de l'ordre de 140-180°C.

La présente invention a pour but de permettre de fabriquer de façon continue, et dans un seul dispositif, des pâtes alimentaires en réduisant le temps total du procédé, constitué des phases de mélange, de pétrissage et d'extrusion, à moins d'une minute.
Il a ainsi été trouvé que, sous certaines conditions d'utilisation, il était possible d'atteindre ce but avec un dispositif d'extrusion à deux vis parallèles s'engrenant l'une dans l'autre.

La présente invention a ainsi pour objet un procédé de fabrication par extrusion de pâtes alimentaires présentant une teneur en eau après extrusion d'au moins 28% en poids, mis en oeuvre à l'aide d'un dispositif unique constitué de deux vis sans fin, identiques et parallèles, tournant dans le même sens en s'engrenant l'une dans l'autre et situées dans un fourreau, dans lequel on mélange une semoule de céréales, d'une granulométrie inférieure à 300 µm avec de l'eau pour atteindre une teneur en eau de 30% à 35% en poids, on établit par pétrissage le réseau de gluten, puis l'on extrude le produit obtenu, la température du produit demeurant inférieure à 55°C pendant toute la durée du procédé.

Grâce à l'humidité de départ et l'humidité de sortie il est possible d'extruder effectivement la pâte obtenue après pétrissage dans un dispositif à deux vis en évitant une montée en température excessive.
De plus l'utilisation d'une semoule présentant une granulométrie inférieure à 300 µm permet d'obtenir une humidification à la fois rapide, et surtout homogène, qu'il ne serait pas possible d'obtenir si il y avait une trop grande dispersion de la granulométrie de la semoule.

La présente invention a aussi pour objet un dispositif, pour la mise en oeuvre du procédé ci-dessus, comprenant deux vis sans fin, identiques et parallèles s'engrenant l'une dans l'autre et placées à l'intérieur d'un fourreau muni à une de ses extrémités d'une filière d'extrusion et à son autre extrémité d'un dispositif d'alimentation en semoule et d'un dispositif d'alimentation en eau, les deux vis comprenant des zones de pétrissage et de mélange ainsi qu'une zone terminale, située à l'extrémité du fourreau jouxtant la filière d'extrusion, pour la mise en pression du produit et son extrusion, une source de mise sous vide partiel du fourreau étant prévue en amont de la zone terminale.

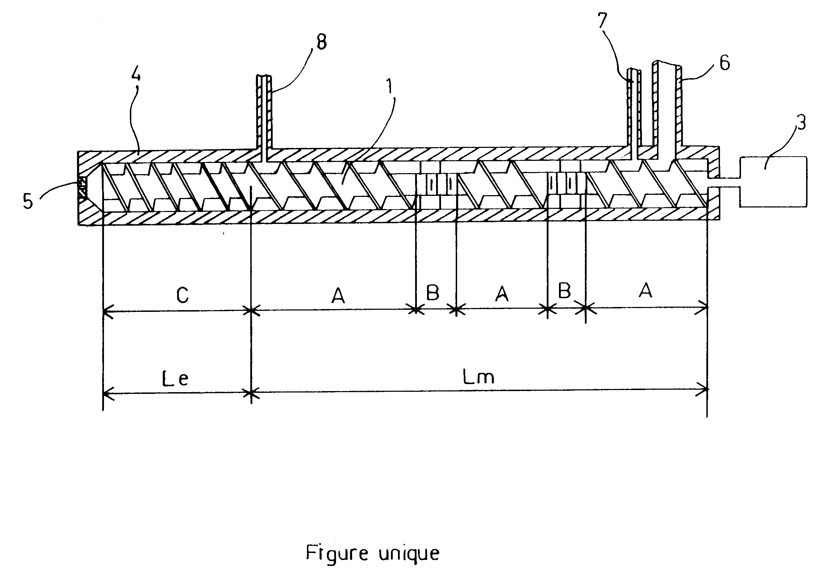

D'autres caractéristiques et avantages ressortiront à la suite de la description qui va suivre faite en référence à la figure annexée unique donnée à titre d'exemple non limitatif et qui représente une vue schématique en coupe verticale du dispositif selon l'invention.

Dans le procédé selon l'invention, une semoule de céréales est portée rapidement à une teneur en eau de 30% à 35% en poids.

Pour permettre une humidification rapide et homogène de la semoule il est utile d'avoir une répartition de la granulométrie aussi étroite que possible. Pour cela, préférablement, la granulométrie de la semoule est inférieure à 300 µm.

Ensuite, la pâte obtenue est pétrie pour permettre l'établissement du réseau de gluten.

Enfin, le produit est extrudé sous pression pour obtenir des pâtes alimentaires présentant une teneur en eau au moins égale à 28% en poids.

Pour éviter une cuisson de la pâte, qui entraînerait des modifications de la structure des amidons et du gluten, la totalité du procédé se déroule à une température inférieure à 55°C.

Par ailleurs, pour permettre une fabrication en continu dans un seul dispositif, les opérations d'homogénéisation, de pétrissage et d'extrusion sont réalisées dans un dispositif unique constitué de deux vis sans fin, identiques et parallèles, tournant dans le même sens en s'engrenant l'une dans l'autre et situées dans un fourreau.

Pour que ce traitement en continu puisse effectivement être réalisé en évitant par ailleurs une montée en température et en permettant de plus des débits industriellement acceptables il est nécessaire d'avoir une viscosité suffisamment faible pour éviter un échauffement par frottement.

Or, toutes choses égales par ailleurs, plus la température est faible, plus la viscosité est élevée et plus la pression augmente.

Pour pouvoir travailler à des températures suffisamment faibles pour éviter une cuisson du produit tout en ayant par ailleurs une viscosité acceptable pour éviter un blocage du dispositif et pour autoriser par ailleurs des débits de fabrication suffisants, il a ainsi été trouvé qu'il fallait une teneur en eau de départ de 30% à 35% en poids pour obtenir en sortie un produit présentant encore une teneur en eau d'au moins 28% en poids après extrusion.

En effet, entre la phase de pétrissage - homogénéisation et la phase d'extrusion il est utile de prévoir une phase de dégazage par mise sous vide partiel afin d'éliminer les gaz inclus dans le produit suite au pétrissage, ceci s'accompagnant d'une certaine perte d'eau.

Il a par ailleurs été trouvé que, préférablement, les deux vis devaient tourner à une vitesse comprise entre 80 et 120 tours par minute.

Il est ainsi possible, en moins d'une minute, d'homogénéiser la semoule et l'eau, de pétrir le mélange et enfin de l'extruder pour obtenir un produit qui ne nécessite plus que d'être séché par un procédé connu.

Il va maintenant être décrit le dispositif pour la mise en oeuvre du procédé selon l'invention.

Comme on le voit représenté Fig. unique, un dispositif d'extrusion selon l'invention comprend deux vis d'extrusion 1, identiques et parallèles, mobiles en rotation autour de leur axe et tournant dans le même sens, entraînées par un moteur 3, la puissance transmise par les vis représentant environ 25% de la puissance du moteur 3.

Pour des besoins de clarté, une seule vis a été représentée sur la figure.

Les vis d'extrusion 1 sont montées dans un fourreau 4 qui, à une extrémité opposée au moteur 3, présente une section qui se rétrécit se terminant par une filière 5 d'extrusion. A une extrémité du fourreau 4 opposée à celle présentant la filière 5 sont prévus deux dispositifs d'alimentation 6 et 7.

Des moyens de régulation de la température du fourreau 4 peuvent être prévus par exemple constitués d'une circulatin d'eau.

Le dispositif d'alimentation 6, le plus éloigné de la filière 5, sert à délivrer la semoule, le dispositif 7, à proximité du dispositif 6, servant à l'alimentation en eau.

Des moyens pour réguler les alimentations en semoule et en eau sont bien entendu prévus mais non représentés.

La Figure unique montre par ailleurs que les vis 1 présentent en alternance des zones A dans lesquelles s'opère le mélange intime de l'eau et de la semoule et des zones B dans lesquelles est réalisé le pétrissage proprement dit.

En aval de ce segment de mélange et de pétrissage de la pâte, constitué par les zones A et B, est prévu une zone C dans laquelle la pression peut atteindre plusieurs dizaines de bars et même dépasser 100 bars.

C'est cette zone C qui sert à l'extrusion proprement dite du produit.

En amont de cette zone C, de préférence à la limite entre le segment de mélange et de pétrissage et la zone C, est prévu un dispositif 8 de mise sous vide qui permet d'éviter la montée en pression dans les zones A et B et qui par ailleurs, en autorisant un dégazage de la pâte, permet d'obtenir un produit final de meilleure qualité plus compact et de meilleur aspect extérieur.

Par ailleurs, la longueur Le de la zone d'extrusion C et la longueur Lm du segment constitué par les zones A et B sont dans un rapport Le/Lm compris entre 0,05 et 0,1.

Enfin, soit D le diamètre des vis 1 et 2 et L la longueur totale des zones A, B et C des vis 1 et 2, qui représentent la longueur active de ces vis, le rapport L/D est compris entre 25 et 30.

### Exemple :

Une semoule de blé de type durum, d'une teneur en eau de 14% en poids, a été additionnée de 28,7% d'eau produisant ainsi une pâte présentant une teneur en eau de 33,16% en poids.

Ce mélange a été traité d'après le procédé selon l'invention dans un dispositif selon l'invention à une température d'extrusion de 51,9°C les vis tournant à 120 tours par minute.

Il a été ainsi obtenu des pâtes alimentaires en moins d'une minute d'une qualité comparable à celle obtenue par les procédés antérieurs.

## Revendications

1. Procédé de fabrication par extrusion de pâtes alimentaires présentant une teneur en eau après extrusion d'au moins 28% en poids, mis en oeuvre à l'aide d'un dispositif unique constitué de deux vis sans fin, identiques et parallèles, tournant dans le même sens en s engrenant l'une dans l'autre et situées dans un fourreau, dans lequel
. on mélange une semoule de céréales, d'une granulométrie inférieure à 300 µm avec de l'eau pour atteindre une teneur en eau de 30% à 35% en poids,
. on établit par pétrissage le réseau de gluten, puis
. l'on extrude le produit obtenu,
la température du produit demeurant inférieure à 55°C pendant toute la durée du procédé.

2. Procédé selon la revendication 1, dans lequel les deux vis tournent à une vitesse comprise entre 80 et 120 tours par minute.

3. Dispositif pour la mise en oeuvre du procédé selon l'une des revendications précédentes comprenant
. deux vis (1) sans fin, identiques et parallèles s'engrenant l'une dans l'autre et placées à l'intérieur d'un fourreau (4),
. ledit fourreau étant muni à une de ses extrémités d'une filière d'extrusion (5) et à son autre extrémité d'un dispositif d'alimentation (6) en semoule et d'un dispositif d'alimentation (7) en eau,
. les deux vis comprenant des zones de mélange (A) et de pétrissage (B), ainsi qu'une zone terminale (C) pour la mise en pression du produit et son extrusion, située à l'extrémité du fourreau jouxtant la filière d'extrusion,
. une source (8) de mise sous vide partiel du fourreau étant prévue en amont de la zone terminale (C).

4. Dispositif selon la revendication 3 dans lequel les vis présentent en alternance des zones (A) dans lesquelles s'opère le mélange intime de l'eau et de la semoule et des zones (B) dans lesquelles est réalisé le pétrissage proprement dit, ce segment de mélange et de pétrissage, constitué par les zones (A) et (B), étant prolongé en aval par une zone (C) de mise en pression destinée à l'extrusion du produit.

5. Dispositif selon la revendication 4 dans lequel, en amont de la zone (C), de préférence à la limite entre le segment de mélange et de pétrissage et la zone (C), est prévu un dispositif (8) de mise sous vide partiel de ce segment de mélange et de pétrissage.

6. Dispositif selon la revendication 3 dans lequel, soit D le diamètre des vis (1), soit L la longueur active de ces vis (1), le rapport L/D est compris entre 25 et 30.

## Claims

1. A process for the production by extrusion of pastas having a water content after extrusion of at least 28% by weight carried out in a single unit consisting of two identical and parallel endless screws rotating in the same direction as, and interengaging in, one another and accommodated in a casing, in which
. a cereal semolina having a particle size below 300 µm is mixed with water to a water content of 30% to 35% by weight,
. the gluten network is established by kneading,
. the product obtained is extruded,
the temperature of the product remaining below 55°C for the entire duration of the process.

2. A process as claimed in claim 1, in which the two screws rotate at a speed of 80 to 120 revolutions per minute.

3. An extrusion unit for carrying out the process described above, comprising
. two identical and parallel, interengaging endless screws (1) accommodated in a casing (4),
. the casing being equipped at one of its ends with an extrusion die (5) and, at its other end, with a supply means (6) for semolina and with a water supply means (7),
. the two screws comprising kneading and mixing zones (A,B) and also a terminal zone (C) situated at the end of the casing (4) adjoining the extrusion die (5) for placing the product under pressure and extruding the product,
. a source (8) for placing the casing under a partial vacuum being provided upstream of the terminal zone (C).

4. An extrusion unit as claimed in claim 3, in which the screws alternately comprise zones (A), in which the water and the semolina are thoroughly mixed, and zones (B) in which the actual kneading takes place, this mixing and kneading section consisting of the zones (A) and (B) being extended by a compression zone (C) intended for the extrusion of the product.

5. An extrusion unit as claimed in claim 4, in which means (8) for placing the mixing and kneading section under a partial vacuum are provided upstream of the zone (C), preferably at the boundary between the mixing and kneading section and the zone (C).

6. An extrusion unit as claimed in claim 3, in which, if D is the diameter of the screws (1) and L is the active length of the screws (1), the ratio L:D is between 25 and 30.

## Patentansprüche

1. Extrusionsverfahren zur Herstellung von Teigwaren mit einem Wassergehalt nach Extrusion von wenigstens 28 Gew.-% mit Hilfe einer einzigen Vorrichtung, die aus zwei gleich ausgebildeten parallelen Schnecken besteht, die sich im selben Sinn drehen, miteinander kämmen und in einem Gehäuse angeordnet sind, bei welchem ein Getreidegrieß mit einer Korngröße von unter 300 µm mit Wasser gemischt wird, um einen Wassergehalt von 30 bis 35 Gew.-% zu erreichen, durch Kneten das Glutengerüst hergestellt wird und das erhaltene Produkt extrudiert wird,wobei die Temperatur des Produkts während des gesamten Verfahrens unter 55°C bleibt.

2. Verfahren nach Anspruch 1, im dem sich zwei Schnecken mit einer Geschwindigkeit von 80 bis 120 U/min drehen.

3. Vorrichtung zur Durchführung des Verfahrens nach einem der vorhergehenden Ansprüche, bestehend aus zwei gleich ausgebildeten parallelen Schnecken (1), die miteinander kämmen und in einem Gehäuse (4) angeordnet sind, das an einem seiner Enden mit einer Extrusionsdüse (5) und an seinem anderen Ende mit einer Grießzufuhrvorrichtung (6) und einer Wasserzufuhrvorrichtung (7) versehen ist, wobei die beiden Schnecken Mischzonen (A) und Knetzonen (B) sowie eine Endzone (C) zum Unterdrucksetzen und Extrudieren des Produkts besitzen, die an dem der Extrusionsdüse benachbarten Ende des Gehäuses gelegen ist, und vor der Endzone (C) eine Einrichtung (8) zur Herstellung eines Unterdrucks im Gehäuse vorgesehen ist.

4. Vorrichtung nach Anspruch 3, bei der die Schnecken abwechselnd Zonen (A), in denen die innige Mischung des Wassers und des Grießes stattfindet, und Zonen (B) besitzt, in denen die eigentliche Knetung vorgenommen wird, wobei dieses aus den Zonen (A) und (B) bestehende Misch- und Knetsegment durch eine Zone (C) zum Unterdrucksetzen des Produkts für seine Extrusion verlängert ist.

5. Vorrichtung nach Anspruch 4, bei der vor der Zone (C) und vorzugsweise an der Schnittstelle zwischen dem Misch- und Knetsegment und der Zone (C) eine Vorrichtung (8) zur Erzeugung eines Unterdrucks in diesem Misch- und Knetsegment vorgesehen ist.

6. Vorrichtung nach Anspruch 3, bei der, wenn D der Durchmesser der Schnecken (1) und L die aktive Länge dieser Schnecken (1) ist, das Verhältnis L/D 25 bis 30 beträgt.
